# EUROPÄISCHE PATENTSCHRIFT

(11) **EP 0 722 398 B1**
(45) Veröffentlichungstag und Bekanntmachung des Hinweises auf die Patenterteilung: **29.01.1997**
(21) Anmeldenummer: 94928298.2
(22) Anmeldetag: 12.10.1994
(51) Int. Cl.: B60T 8/36, F16K 27/02

(54) **HYDRAULIKAGGREGAT FÜR SCHLUPFGEREGELTE BREMSANLEGEN VON KRAFTFAHRZEUGEN**
HYDRAULIC UNIT FOR MOTOR VEHICLE BRAKING SYSTEMS WITH SLIP CONTROL
GROUPE HYDRAULIQUE POUR SYSTEMES DE FREINAGE ANTIPATINAGE D'AUTOMOBILES

(30) Priorität: 22.10.1993 DE 4336092
(43) Veröffentlichungstag der Anmeldung: 24.07.1996
(73) Patentinhaber: ROBERT BOSCH GMBH, 70442 Stuttgart (DE)
(72) Erfinder: MEGERLE, Friedrich, D-87524 Sonthofen (DE); FRIEDOW, Michael, D-71732 Tamm (DE); LANDER, Juergen, D-70563 Stuttgart (DE); SPALDING, Georg, D-70191 Stuttgart (DE); GUGGEMOS, Johann, D-87544 Blaichach (DE); HOELLE, Hermann, D-87544 Blaichach (DE); SPECKER, Michael, D-87544 Blaichach (DE); SCHNALZGER, Guenther, D-87544 Blaichach (DE); HUEBER, Hubert, D-87480 Weitnau (DE); SOMMER, Dietmar, D-71254 Ditzingen (DE)
(86) Internationale Anmeldenummer: DE9401193
(87) Internationale Veröffentlichungsnummer: WO9511150

(56) Entgegenhaltungen:
- WO-A-91/17378
- WO-A-93/19961
- WO-A-94/01708
- DE-A- 3 810 581
- DE-A- 4 030 571
- DE-A- 4 202 389
- DE-A- 4 330 616

## Beschreibung

### Stand der Technik

Die Erfindung geht aus von einem Hydraulikaggregat für schlupfgeregelte Bremsanlagen von Kraftfahrzeugen nach der Gattung des Hauptanspruchs.

Es ist schon ein derartiges Hydraulikaggregat bekannt (DE 42 02 389 A1), bei dem das elektromagnetisch betätigte Ventil als eine aus einem hydraulischen und einem elektrischen Teil bestehende Baugruppe im Ventilblock montiert ist. Dieser hat eine tiefe, stark gestufte Äufnahmebohrung, in deren tiefliegendem, durchmesserkleinem Abschnitt ein Zulaufkanal und ein Ablaufkanal für Druckmittel münden. Der in diesen Bohrungsabschnitt eingreifende, eine vormontierte Einheit bildende hydraulische Teil des Ventils trägt umfangseitig seiner einen Ventilkörper, einen Magnetanker und einen Magnetkern aufnehmenden Hülse zwei Dichtringe, von denen der eine zwischen den Kanälen und der andere gegen die Begrenzungsebene des Ventilblocks hin angeordnet und vom elektrischen Teil des Ventils axial abgestützt ist. Der elektrische Teil greift hierzu auf der Seite der Begrenzungsebene in einen durchmessergroßen Abschnitt der Aufnahmebohrung ein, in der er mittels eines in eine Hinterschneidung der Bohrung eingepreßten Halterings durch eine formschlüssige Verbindung gehalten ist. Die auf den hydraulischen Teil einwirkenden Kräfte des Druckmittels müssen bei dieser bekannten Ausführungsform vom elektrischen Teil aufgenommen und durch die Formschlußverbindung auf den Ventilblock übertragen werden. Der elektrische Teil ist daher relativ großen Kräften ausgesetzt. Außerdem ist die Ausgestaltung dieser Verbindung kostenaufwendig und erfordert einen großen Raumbedarf.

Eine raumsparende und hinsichtlich der Kräfteableitung günstigere Befestigung eines Elektromagnetventils in einem Ventilblock eines Hydraulikaggregats für schlupfgeregelte Bremsanlagen ist durch DE 40 30 571 A1 bekannt. Dort besteht das Ventil aus einem hydraulischen Teil und einem auf diesen aufgesteckten elektrischen Teil. Der hydraulische Teil ist keine vormontierte Einheit. Er wird vielmehr aus Einzelteilen am Ventilblock aufgebaut, d. h. zuerst wird ein Ventilkörper mit Ventilsitz in eine abgestufte Aufnahmebohrung eingesetzt und mittels einer Prägeverbindung befestigt. Darauffolgend wird eine Führungsscheibe für eine Ventilnadel in die Bohrung eingebracht und befestigt. Nahe der Begrenzungsebene des Ventilblocks wird dann eine Buchse in die Aufnahmebohrung gefügt. Diese dient der Aufnahme einer endseitig trichterförmig aufgeweiteten Ventilhülse, in der ein Magnetanker und ein Magnetkern aufgenommen sind. Die Ventilhülse wird durch eine Prägeverbindung im Ventilblock befestigt, bei der vom Rand der Aufnahmebohrung verdrängter Werkstoff den trichterförmigen, von der Buchse unterstützten Hülsenabschnitt überdeckt. Diese Prägeverbindung ist hydraulisch hoch belastet und verlangt absolute Dichtheit. Sie ist daher nur in einem Ventilblock aus Stahl erzeugbar (vergleiche DE 38 10 581 A1). Ganz wesentlich erschwert ist aber bei dieser Ausführungsform die Einstellung des Ventilhubes, denn dieser ist in erheblichem Maße von den Toleranzen der erwähnten Einzelteile des hydraulischen Teils, den Toleranzen der Aufnahmebohrung und von der Güte der Prägeverbindungen abhängig. Nach dem Herstellen der Prägeverbindungen auftretende Mängel des hydraulischen Teils des Ventils sind nicht mehr reparabel.

### Vorteile der Erfindung

Das erfindungsgemäße Hyraulikaggregat mit den kennzeichnenden Merkmalen des Hauptanspruchs hat demgegenüber den Vorteil, daß die Befestigung des hydraulischen Teils mittels der ersten Prägeverbindung in einem von der Mündung der Aufnahmebohrung fernen Bereich erfolgt, was die Anforderungen an den Werkstoff des Ventilblocks und die Prägeverbindung verringert, so daß statt Stahl beispielsweise auch duktiles Leichtmetall Verwendung finden kann. Die Abdichtung der Aufnahmebohrung nach außen erfolgt vielmehr durch den gegen die Begrenzungsebene des Ventilblocks gelegenen Dichtring. Dessen Belastung durch hydraulische Kräfte ist in vorteilhafter Weise von dem mit der zweiten Prägeverbindung befestigten Flansch aufgenommen. Von ganz wesentlichem Vorteil ist aber die Verwendung des hydraulischen Teils als vormontierte Einheit, weil diese bei dem in wenigen Arbeitsschritten ausführbaren Fügevorgang im Ventilblock keiner Veränderung des voreingestellten Ventilhubs unterliegt. Das Hydraulikaggregat ist daher preisgünstig und mit hoher Qualität herstellbar.

Durch die in den Unteransprüchen aufgeführten Maßnahmen sind vorteilhafte Weiterbildungen und Verbesserungen des im Hauptanspruch angegebenen Hydraulikaggregats möglich.

Besonders vorteilhaft ist die Maßnahme, die Hülse des hydraulischen Teils mit in die erste Prägeverbindung einzubeziehen, indem die Hülse in der Ringnut vom verdrängten Werkstoff des Ventilblocks umschlossen und innig an den Ventilkörper angelegt wird. Die Belastbarkeit der Hülse durch hydraulische Kräfte ist hierdurch erheblich erhöht. Außerdem ist die Abdichtung des hydraulischen Teils zwischen Hülse und Ventilkörper verbessert.

### Zeichnungen

Ausführungsbeispiele der Erfindung sind in den Zeichnungen vereinfacht dargestellt und in der nachfolgenden Beschreibung näher erläutert. Es zeigen Figur 1 einen Längsschnitt durch ein im Ventilblock eines Hydraulikaggregates für schlupfgeregelte Bremsanlagen von Kraftfahrzeugen durch Prägeverbindungen befestigtes, elektromagnetisch betätigtes Ventil, Figur 2 eine erste Ausführungsform einer Verbindung zwischen einer Hülse und einem Ventilkörper des hydraulischen Teils des Ventils vor Erzeugen der Prägeverbindung und Figur 3 nach erzeugter Prägeverbindung, Figur 4 eine zweite Ausführungsform der vorgenannten Verbindung nach dem Prägen und Figur 5 eine dritte Ausführungsform dieser Verbindung vor dem Prägevorgang.

### Beschreibung der Ausführungsbeispiele

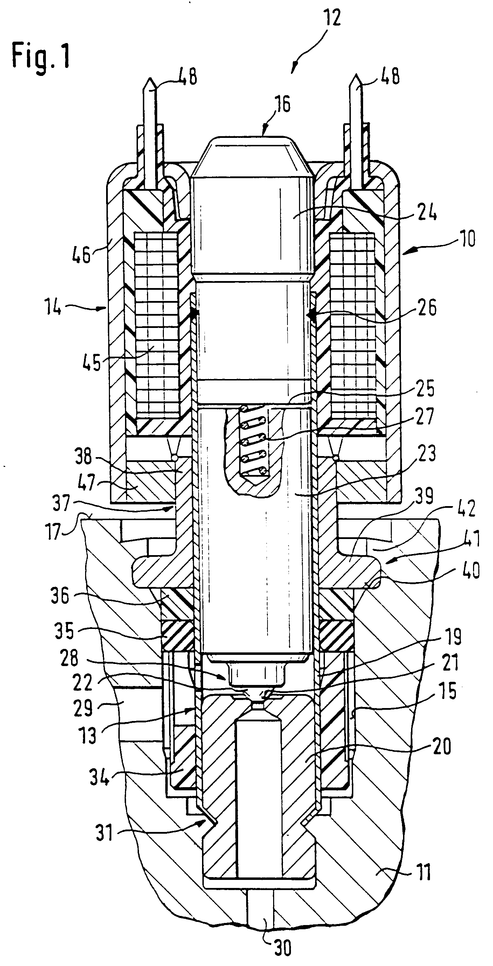

Ein in Figur 1 dargestelltes, elektromagnetisch betätigtes Ventil 10 ist an einem Ventilblock 11 angeordnet und bildet einen Teil eines im übrigen nicht gezeichneten Hydraulikaggregats 12 für schlupfgeregelte Bremsanlagen von Kraftfahrzeugen. Das Ventil 10 besteht aus einem hydraulischen Teil 13 und einem elektrischen Teil 14. Der hydraulische Teil 13 ist im wesentlichen in einer gestuften Aufnahmebohrung 15 des aus einer duktilen Aluminium-Legierung bestehenden Ventilblocks 11 aufgenommen und befestigt. In Verlängerung der Aufnahmebohrung 15 überragt der hydraulische Teil 13 mit einem Ventildom 16 eine Begrenzungsebene 17 des Ventilblocks 11. Auf den Ventildom 16 ist der elektrische Teil 14 aufgesteckt.

Der hydraulische Teil 13 weist eine dünnwandige, rohrförmige Hülse 19 kreisringförmigen Querschnitts auf. Von der Aufnahmebohrung 15 ausgehend ist in der Hülse 19 ein Ventilkörper 20 mit Preßsitz aufgenommen. Der Ventilkörper 20 hat einen Ventilsitz 21 für ein Schließglied 22 eines in der Hülse 19 längsbewegbaren Magnetankers 23. Am vom Ventilkörper 20 abgewandten Ende ist die Hülse 19 durch einen Magnetkern 24 als Teil des Ventildoms 16 verschlossen. Der Magnetkern 24 greift unter Belassen eines Luftspalts 25 zum Magnetanker 23 mit Preßsitz in die Hülse 19 ein und ist mit dieser durch eine umlaufende Schweißung 26 verbunden. Diese Verbindung ist druckdicht. Im Magnetanker 23 ist eine am Magnetkern 24 angreifende Schließfeder 27 aufgenommen, welche in der gezeichneten Ruhestellung des Ventils 10 das Schließglied 22 am Ventilsitz 21 anliegend hält: Das Ventil 10 ist somit stromlos geschlossen.

Der hydraulische Teil 13 ist eine vormontierte Einheit mit vor dem Fügen in die Aufnahmebohrung 15 eingestelltem Hub des von dem Ventilsitz 21 und dem Schließglied 22 gebildeten Sitzventils 28. Dieses steht einerseits mit einem Zulaufkanal 29 und andererseits mit einem Ablaufkanal 30 im mündungsfernen Abschnitt der Aufnahmebohrung 15 in Verbindung. Der hydraulische Teil 13 ist durch eine zwischen dem Zulaufkanal 29 und dem Ablaufkanal 30 gelegene, erste Prägeverbindung 31 druckdicht in dem Ventilblock 11 aufgenommen. Diese einen Formschluß mit dem Ventilblock 11 darstellende Prägeverbindung ist in weiteren Ausführungsbeispielen weiter unten beschrieben.

Auf die Hülse 19 des hydraulischen Teils 13 sind vom Ventildom 16 her eine dem Zulaufkanal 29 zugeordnete Filterhülse 34, ein Dichtring 35 und ein Stützring 36 aufgeschoben. Die Aufnahmebohrung 15 ist mit dem den hydraulischen Teil 13 umschließenden Dichtring 35 gegen die Begrenzungsebene 17 hin druckdicht abgeschlossen. Hierzu ist vom Ventildom 16 her eine Buchse 37 auf den hydraulischen Teil 13 des Ventils 10 geschoben, deren relativ dickwandige Rohrwand 38 im Bereich des Magnetankers 23 die Hülse 19 mit geringem, radialem Spiel umschließt. Auf ihrer dem Stützring 36 zugewandten Seite besitzt die Buchse 37 einen radial verlaufenden Flansch 39. Dieser Flansch 39 ist in der Aufnahmebohrung 15 an einer Bohrungsstufe 40 abgestützt und durch eine zweite Prägeverbindung 41 mit dem Ventilblock 11 verbunden. Diese zweite Prägeverbindung 41 ist durch eine Verstemmung des mündungsseitigen Randes der Aufnahmebohrung 15 erzielt, bei der verdrängter Werkstoff des Ventilblocks 11 in Form eines Wulstes 42 den Flansch 39 mündungsseitig überdeckt. Diese Formschlußverbindung vermag auf dem Dichtring 35 lastende, hydraulische Kräfte aufzunehmen und in den Ventilblock 11 abzuleiten.

Der elektrische Teil 14 des Ventils 10 ist nach dem Befestigen der Buchse 37 im Ventilblock 11 auf den Ventildom 16 im Bereich der magnetisch wirksamen Elemente Magnetanker 23 und Magnetkern 24 aufgesteckt. Der elektrische Teil 14 hat eine elektrische Spule 45, welche den Ventildom 16 im wesentlichen magnetkernseitig umschließt. Die Spule 45 ist von einem Gehäuse 46 aus weichmagnetischem Werkstoff übergriffen, in das bodenseitig eine gleichfalls aus weichmagnetischem Werkstoff bestehende Ringscheibe 47 eingepreßt ist. Auf der von der Begrenzungsebene 17 abgewandten Stirnseite des Gehäuses 46 sind Anschlußstifte 48 der Spule 45 ausgebildet. Das Gehäuse 46 des elektrischen Teils 14 umgreift vorzugsweise spielfrei einerseits den Magnetkern 24 und andererseits mit seiner Ringscheibe 47 die magnetankerseitige Rohrwand 38 der Buchse 37. Bei erregter elektrischer Spule 45 trägt die Buchse 37 ebenso wie der Magnetkern 24, das Gehäuse 46 und die Ringscheibe 47 zum Leiten des Magnetflusses auf den Magnetanker 23 des hydraulischen Teils 13 bei. Der magnetisch wirksame Magnetkern 24 überführt den Magnetanker 23 in die Offenstellung des Ventils 10.

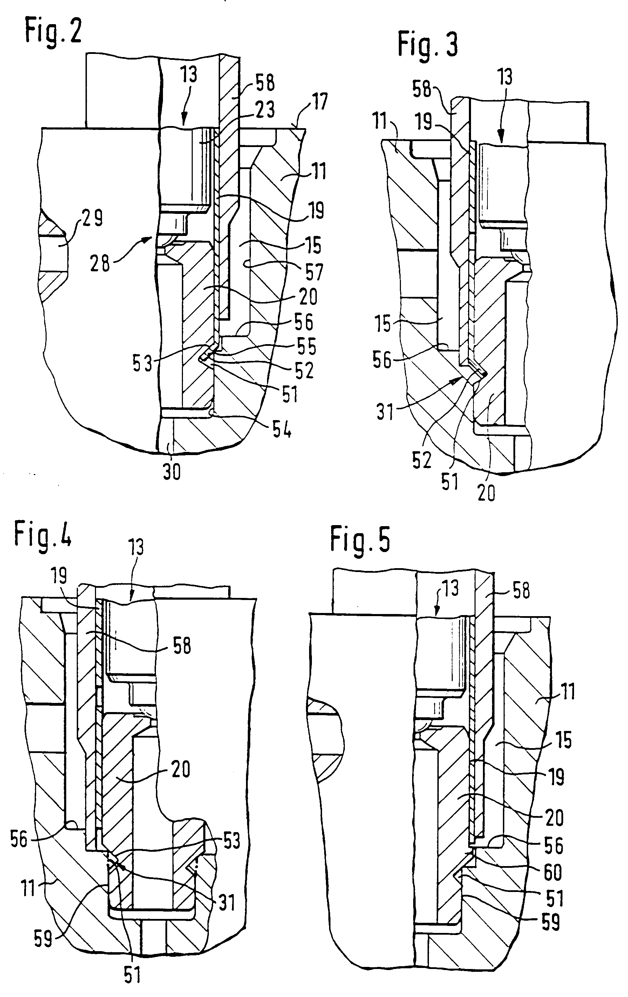

Die der Befestigung des hydraulischen Teils 13 des Ventils 10 im Ventilblock 11 dienende erste Prägeverbindung 31 ist wie folgt ausgebildet (s. Fig. 2): Der Ventilkörper 20 des Sitzventils 28 hat die Form eines geraden Kreiszylinders. Er ist mit dem überwiegenden Teil seiner Länge mit Preßsitz in der Hülse 19 des hydraulischen Teils 13 aufgenommen. Der Ventilkörper 20 weist in seinem Mittelabschnitt eine Ringnut 51 dreieckförmigen Querschnitts auf. Der endseitige Abschnitt 52 der Hülse 19 ist entlang dem gesamten Nutumfang durch Bördeln an die magnetankerseitige Nutwand 53 der Ringnut angelegt. Der nicht von der Hülse 19 umschlossene Teil des Ventilkörpers 20 greift mit geringem Spiel in einen ablaufkanalseitigen Abschnitt 54 der Aufnahmebohrung 15 ein. Dieser Bohrungsabschnitt 54 endet an einer Umlaufkante 55 der Aufnahmebohrung 15. Danach erweitert sich die Aufnahmebohrung 15 auf ein den Außendurchmesser der Hülse 19 geringfügig überschreitendes Maß. Im weiteren Verlauf ist die Aufnahmebohrung 15 gegen die Begrenzungsebene 17 hin unter Bildung einer Bohrungsstufe 56 auf einen Abschnitt 57 mit einem relativ großen Durchmesser erweitert. Dieser Abschnitt 57 gibt Raum für ein den hydraulischen Teil 13 mit geringem Spiel umschließendes Stemmwerkzeug 58, von dem in den Figuren 2 bis 5 lediglich der bohrungsseitige Teil dargestellt ist.

Die Umlaufkante 55 der Aufnahmebohrung 15 bildet einen die Einstecktiefe des hydraulischen Teils 13 in den Ventilblock 11 begrenzenden Anschlag, an dem der in die Ringnut 51 eingebördelte Abschnitt 52 der Hülse 19 vor der Herstellung der ersten Prägeverbindung 31 angreift. Diese Prägeverbindung 31 wird durch Niederfahren des Stemmwerkzeugs 58 dadurch erzeugt, daß das Werkzeug nach dem Auftreffen auf die die Aufnahmebohrung 15 stark erweiternde Bohrungsstufe 56 Werkstoff des Ventilblocks 11 in die Ringnut 51 verdrängt. Wie Figur 3 deutlich zeigt, füllt der verdrängte Werkstoff die Ringnut 51 aus, wobei er, zusätzlich zu dem durch die Bördelung des Hülsenabschnitts 52 erzielten Formschluß, noch einen Kraftschluß zwischen der Hülse 19 und dem Ventilkörper 20 hervorruft, welcher die Dichtheit und Festigkeit der ersten Prägeverbindung 31 unterstützt. Nach dem Erzeugen der ersten Prägeverbindung 31 gibt das Stemmwerkzeug 58 den hydraulischen Teil 13 des Ventils 10 frei, so daß die Montage der weiter vorn erwähnten Einzelteile des Ventils in der Aufnahmebohrung 15 erfolgen kann.

Abweichend von dieser Ausführungsform der ersten Prägeverbindung 31 kann die Hülse 19 axial über die Ringnut 51 hinaus verlängert sein. Ein Formschluß der Hülse 19 mit dem Ventilkörper 20 ist in diesem Fall durch Einsicken der Hülse in die Ringnut 51 erzielbar. Hierdurch wird die Hülse 19 an beide Nutwände der Ringnut 51 formschlüssig angelegt. Um die Umlaufkante 55 als Anschlag zu nutzen, ist es bei dieser Ausführungsform nötig, den magnetankerseitigen Abschnitt des Ventilkörpers 20 nach der Ringnut 51 im Durchmesser kleiner zu gestalten, wie dies beim Ausführungsbeispiel nach Figur 4 dargestellt ist.

Das in Figur 4 dargestellte Ausführungsbeispiel zeichnet sich dadurch aus, daß die Hülse 19 stirnseitig mit Abstand vor der Ringnut 51 des Ventilkörpers 20 endet. Der Ventilkörper 20 ist nach der Ringnut 51 mit einer durchmessermindernden Abstufung 59 versehen. Hierdurch ist erreicht, daß die hülsenseitige, durchmessergrößere Nutwand 53 der Ringnut 51 vor der Erzeugung der ersten Prägeverbindung 31 an dem die Einstecktiefe des hydraulischen Teils 13 in den Ventilblock 11 begrenzenden, von der Umlaufkante 55 der Aufnahmebohrung 15 gebildeten Anschlag angreift, wie dies in Übereinstimmung mit Fig. 2 mit einer strichpunktierten Linie im Bereich der Ringnut angedeutet ist. Figur 4 gibt den Zustand nach dem abgeschlossenen Stemmvorgang wieder, durch den Werkstoff des Ventilblocks 11 in die im Bereich der Abstufung 56 des Ventilkörpers 20 gelegene Ringnut 51 verdrängt ist.

Das Ausführungsbeispiel nach Figur 5 zeigt den Zustand vor dem Vorgang des Verstemmens. Hier ist der Ventilkörper 20 in gleicher Weise wie bei dem Ausführungsbeipiel nach Figur 4 mit einer durchmessermindernden Abstufung 59 versehen. Die Ringnut 51 liegt gleichfalls im Bereich der Abstufung 59. Auch ist der Ventilkörper 20 nur auf einem Teil seiner Länge von der Hülse 19 kraftschlüssig umschlossen. Zwischen der Ringnut 51 und der Hülse 19 hat der Ventilkörper 20 einen seinen Durchmesser auf den Außendurchmesser der Hülse vergrößernden, umlaufenden Absatz 60. Dieser hat den Zweck, beim Erzeugen der Prägeverbindung 31 das Fließen des von der Abstufung 56 der Aufnahmebohrung 15 verdrängten Werkstoffs des Ventilblocks 11 in die Ringnut 51 zu unterstützen.

## Patentansprüche

1. Hydraulikaggregat (12) für schlupfgeregelte Bremsanlagen von Kraftfahrzeugen,
mit den Merkmalen:
- an einem Ventilblock (11) aus Metall ist wenigstens ein elektromagnetisch betätigtes Ventil (10) angeordnet,
- das Ventil (10) hat einen in einer abgestuften Aufnahmebohrung (15) des Ventilblocks (11) aufgenommenen hydraulischen Teil (13) und einen elektrischen Teil (14), der auf einen eine Begrenzungsebene (17) des Ventilblocks (11) übergreifenden Ventildom (16) des hydraulischen Teils (13) aufgesteckt ist,
- der hydraulische Teil (13) weist eine rohrförmige Hülse (19) auf, in der, ausgehend von dem Grund der Aufnahmebohrung (15) in Richtung auf die Begrenzungsebene (17), ein befestigter Ventilkörper (20) mit einem Ventilsitz (21), ein längsbewegbarer Magnetanker (23) mit einem Ventilschließglied (22) und ein ebenfalls befestigter Magnetkern (24) aufgenommen sind,
- der hydraulische Teil (13) ist eine vormontierte Einheit mit vor dem Fügen in die Aufnahmebohrung (15) eingestelltem Hub des von dem Ventilsitz (21) und dem Ventilschließglied (22) gebildeten Sitzventils (28),
- das Sitzventil (28) steht einerseits mit einem Zulaufkanal (29) und andererseits mit einem Ablaufkanal (30) der Aufnahmebohrung (15) in Verbindung,
- die Aufnahmebohrung (15) ist gegen die Begrenzungsebene (17) hin mit einem den hydraulischen Teil (13) umschließenden Dichtring (35) abgedichtet,
- der hydraulische Teil (13) ist wenigstens mittelbar durch Formschluß mit dem Ventilblock (11) verbunden,
gekennzeichnet durch die folgenden Merkmale:
- der hydraulische Teil (13) ist durch eine zwischen dem Zulaufkanal (29) und dem Ablaufkanal (30) gelegene, erste Prägeverbindung (31) druckdicht in dem Ventilblock (11) aufgenommen,
- die Aufnahmebohrung (15) ist zwischen dem Dichtring (35) und der Begrenzungsebene (17) durch einen radial verlaufenden Flansch (39) einer auf den hydraulischen Teil (13) aufgeschobenen Buchse (37) verschlossen,
- der Flansch (39) der Buchse (37) ist an einer Bohrungsstufe (40) der Aufnahmebohrung (15) abgestützt und durch eine zweite Prägeverbindung (41) mit dem Ventilblock (11) verbunden.

2. Hydraulikaggregat nach Anspruch 1, dadurch gekennzeichnet, daß der Ventilkörper (20) am Außenumfang eine Ringnut (51) für die Aufnahme von zur Erzeugung der ersten Prägeverbindung (31) von einer Bohrungsstufe (56) der Aufnahmebohrung (15) verdrängtem Werkstoff des Ventilblocks (11) hat.

3. Hydraulikaggregat nach Anspruch 2, dadurch gekennzeichnet, daß die Hülse (19) in die Ringnut (51) eingesickt ist.

4. Hydraulikaggregat nach Anspruch 2, dadurch gekennzeichnet, daß die Ringnut (51) dreieckförmigen Querschnitt hat, an deren einer Nutwand (53) ein endseitiger Abschnitt (52) der Hülse (19) entlang dem gesamten Nutumfang durch Bördeln angelegt ist.

5. Hydraulikaggregat nach Anspruch 4, dadurch gekennzeichnet, daß der in der Ringnut (51) eingebördelte Abschnitt (52) der Hülse (19) vor der Erzeugung der ersten Prägeverbindung (31) an einem die Einstecktiefe des hydraulischen Teils (13) in den Ventilblock (11) begrenzenden, von einer Umlaufkante (55) der Aufnahmebohrung (15) gebildeten Anschlag angreift.

6. Hydraulikaggregat nach Anspruch 2, dadurch gekennzeichnet, daß der Ventilkörper (20), der nur auf einem Teil seiner Länge von der Hülse (19) umschlossen ist, in seinem hülsenfreien Abschnitt eine durchmessermindernde Abstufung (59) aufweist, und daß die Ringnut (51) im Bereich der Abstufung (59) liegt.

7. Hydraulikaggregat nach Anspruch 6, dadurch gekennzeichnet, daß die hülsenseitige, durchmessergrößere Nutwand (53) der Ringnut (51) vor der Erzeugung der ersten Prägeverbindung (31) an einem die Einstecktiefe des hydraulischen Teils (13) in dem Ventilblock (11) begrenzenden, von einer Umlaufkante (55) der Aufnahmebohrung (15) gebildeten Anschlag angreift.

8. Hydraulikaggregat nach Anspruch 6, dadurch gekennzeichnet, daß der Ventilkörper (20) zwischen der Ringnut (51) und der Hülse (19) einen seinen Durchmesser auf den Außendurchmesser der Hülse (19) vergrößernden, umlaufenden Absatz (60) hat.

## Claims

1. Hydraulic unit (12) for slip-controlled brake systems of motor vehicles, with the following features:
- at least one electromagnetically actuated valve (10) is arranged on a valve block (11) made of metal,
- the valve (10) has a hydraulic part (13), which is accommodated in a stepped receiving hole (15) in the valve block (11), and an electrical part (14), which is mounted on a valve dome (16) of the hydraulic part (13), the said valve dome projecting above a boundary plane (17) of the valve block (11),
- the hydraulic part (13) has a tubular sleeve (19) in which, working towards the boundary plane (17) from the base of the receiving hole (15), there are accommodated a secured valve body (20) with a valve seat (21), a longitudinally movable magnet armature (23) with a valve-closing member (22), and a likewise secured magnet core (24),
- the hydraulic part (13) is a preassembled unit in which the travel of the seat valve (28) formed by the valve seat (21) and the valve-closing member (22) is set before fitting into the receiving hole (15),
- the seat valve (28) is connected, on the one hand, to an inlet passage (29) and, on the other hand, to an outlet passage (30) of the receiving hole (15),
- the receiving hole (15) is sealed off in the direction of the boundary plane (17) by means of a sealing ring (35) that surrounds the hydraulic part (13),
- the hydraulic part (13) is connected to the valve block (11) at least indirectly, by positive engagement,
characterized by the following features:
- the hydraulic part (13) is accommodated in a pressure-tight manner in the valve block (11) by means of a first stamped joint (31) situated between the inlet passage (29) and the outlet passage (30),
- the receiving hole (15) is closed, between the sealing ring (35) and the boundary plane (17), by a radially extending flange (39) of a bush (37) pushed onto the hydraulic part (13),
- the flange (39) of the bush (37) is supported on a step (40) in the receiving hole (15) and connected to the valve block (11) by a second stamped joint (41).

2. Hydraulic unit according to Claim 1, characterized in that the valve body (20) has on its outer circumference an annular groove (51) to receive material of the valve block (11) displaced from a step (56) in the receiving hole (15) to produce the first stamped joint (31).

3. Hydraulic unit according to Claim 2, characterized in that the sleeve (19) is beaded into the annular groove (51).

4. Hydraulic unit according to Claim 2, characterized in that the annular groove (51) has a triangular cross-section, against one groove wall (53) of which an end section (52) of the sleeve (19) is laid along the entire groove circumference by flanging.

5. Hydraulic unit according to Claim 4, characterized in that, before the production of the first stamped joint (31), that section (52) of the sleeve (19) which is flanged in in the annular groove (51) engages on a stop which is formed by an encircling edge (55) of the receiving hole (15) and limits the depth of insertion of the hydraulic part (13) into the valve block (11).

6. Hydraulic unit according to Claim 2, characterized in that the valve body (20), which is surrounded by a sleeve (19) of only part of its length, has a diameter-reducing step (59) in its sleeve-free section, and in that the annular groove (51) lies in the region of the step (59).

7. Hydraulic unit according to Claim 6, characterized in that, before the production of the first stamped joint, (31), the larger-diameter groove wall (53) of the annular groove (51), that is located on the sleeve side, engages on a stop which is formed by an encircling edge (55) of the receiving hole (15) and limits the depth of insertion of the hydraulic part (13) into the valve block (11).

8. Hydraulic unit according to Claim 6, characterized in that, between the annular groove (51) and the sleeve (19), the valve body (20) has an encircling shoulder (60) which increases its diameter to the outside diameter of the sleeve (19).

## Revendications

1. Groupe hydraulique (12) pour des installations de frein antipatinage de véhicules automobiles ayant les caractéristiques suivantes :
- un bloc de vanne (11) en métal comporte au moins une électrovanne (10),
- l'électrovanne (10) se compose d'une partie hydraulique (13) logée dans un perçage étagé (15) du bloc de vanne (11) et d'une partie électrique (14) engagée sur le dôme de vanne (16) de la partie hydraulique (13), dôme qui dépasse d'un plan de référence (17) du bloc (11),
- la partie hydraulique (13) comprend un manchon tubulaire (19) recevant, en partant du fond du perçage de réception (15) et en allant en direction du plan de référence (17), un corps de soupape (20), fixé avec un siège (21), un induit magnétique (23) mobile longitudinalement et muni d'un organe d'obturation (22) ainsi qu'un noyau magnétique (24) également fixé,
- la partie hydraulique (13) est un ensemble pré-assemblé dont la course de la soupape à siège, formée par le siège (21) et l'organe d'obturation (22) est réglée avant la réunion dans le perçage de réception (15), avec la référence (28) derrière la soupape à siège,
- la soupape à siège (28) communique d'une part avec un canal d'entrée (29) et d'autre part avec un canal de sortie (30) dans le perçage de réception (15),
- le perçage de réception (15) est rendu étanche par rapport au plan de référence (17) par un joint d'étanchéité (35) entourant la partie hydraulique (13),
- la partie hydraulique (13) est reliée au moins indirectement au bloc (11) par une liaison par la forme,
caractérisé en ce que
- la partie hydraulique (13) est reçue de manière étanche à la pression dans le bloc de vanne (11) par une première liaison par repoussage (31) réalisée entre le canal d'entrée (29) et le canal de sortie (30),
- le perçage de réception (15) est fermé entre le joint d'étanchéité (35) et le plan limite (17) par une bride radiale (39) d'une douille (37) emmanchée sur la partie hydraulique (13),
- la bride (39) de la douille (37) s'appuie contre un gradin (40) du perçage de réception (15) et est reliée au bloc de vanne (11) par une seconde liaison repoussée (41).

2. Groupe hydraulique selon la revendication 1,
caractérisé en ce que
le corps de soupape (20) comporte à la périphérie extérieure, une rainure annulaire (51) pour recevoir la matière du bloc (11) refoulée d'un étage (56) du perçage de réception (15) pour réaliser la première liaison par repoussage (31).

3. Groupe hydraulique selon la revendication 2,
caractérisé en ce que
le manchon (19) est enserré dans la rainure annulaire (51).

4. Groupe hydraulique selon la revendication 2,
caractérisé en ce que
la rainure annulaire (51) a une section triangulaire et contre la paroi (53) de cette rainure s'applique un segment d'extrémité (52) de la douille (19) sur toute la périphérie, par repoussage.

5. Groupe hydraulique selon la revendication 4,
caractérisé en ce que
le segment (52) refoulé dans la rainure annulaire (51) pour le manchon (19) s'applique avant que ne soit réalisée cette première liaison par repoussage (31), contre une butée limitant la profondeur d'engagement de la partie hydraulique (13) dans le bloc de vanne (11), cette butée étant réalisée par une arête périphérique (55) du perçage de réception (15).

6. Groupe hydraulique selon la revendication 2,
caractérisé en ce que
le corps de soupape (20) qui n'est entouré que sur une partie de sa longueur par le manchon (19), comporte au niveau de son segment sans manchon, une partie étagée (59) de diamètre réduit, et la rainure annulaire (51) se situe au niveau de la partie étagée (59).

7. Groupe hydraulique selon la revendication 6,
caractérisé en ce que
la paroi (53) de la rainure annulaire (51) de plus grand diamètre, du côté du manchon, agit avant que l'on ne réalise la première liaison par repoussage (31) contre une butée formée par une arête périphérique (55) du perçage (15), et qui limite la profondeur d'enfoncement de la partie hydraulique (13) dans le bloc (11).

8. Groupe hydraulique selon la revendication 6,
caractérisé en ce que
le corps de soupape (20) présente un épaulement périphérique (60) formé par une augmentation de son diamètre jusqu'au diamètre extérieur du manchon (19), entre la rainure annulaire (51) et le manchon (19).
